(19) Europäisches Patentamt
European Patent Office
Office européen des brevets

(11) Veröffentlichungsnummer: **0 418 623 A1**

(12) **EUROPÄISCHE PATENTANMELDUNG**

(21) Anmeldenummer: **90116819.5**

(51) Int. Cl.5: **C09B 62/04**

(22) Anmeldetag: **01.09.90**

(30) Priorität: **16.09.89 DE 3930996**

(43) Veröffentlichungstag der Anmeldung: **27.03.91 Patentblatt 91/13**

(84) Benannte Vertragsstaaten: **CH DE FR GB LI**

(71) Anmelder: **BAYER AG**

**W-5090 Leverkusen 1 Bayerwerk(DE)**

(72) Erfinder: **Michna, Martin, Dr.**
**Ostring 39**
**W-5024 Pulheim(DE)**
Erfinder: **Hoppe, Manfred, Dr.**
**Kölner Strasse 233**
**W-5067 Kürten 2(DE)**
Erfinder: **Herd, Karl-Josef, Dr.**
**Am Gartenfeld 66**
**W-5068 Odenthal(DE)**
Erfinder: **Henk, Hermann, Dr.**
**Roggendorfstrasse 55**
**W-5000 Köln 80(DE)**
Erfinder: **Stöhr, Frank-Michael, Dr.**
**Am Thelen Siefen 10**
**W-5068 Odenthal(DE)**

(54) **Verfahren zur Herstellung von Reaktivfarbstoffen.**

(57) Ein Verfahren zur Herstellung von Reaktivfarbstoffen der Formel

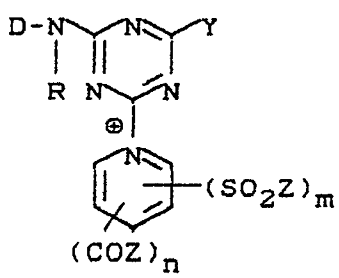

$X^{\ominus}$ (I)

mit den in der Beschreibung angegebenen Substituentenbedeutungen besteht darin, daß man entsprechende Fluortriazinfarbstoffe in Gegenwart säurebindender Mittel in wäßrigem Medium mit den entsprechenden Pyridinverbindungen der Formel

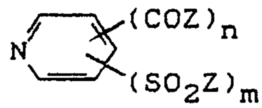

umsetzt.

Die dabei erhaltenen Lösungen oder Dispersionen werden gegebenenfalls einer Druckpermeation unterworfen.

EP 0 418 623 A1

# VERFAHREN ZUR HERSTELLUNG VON REAKTIVFARBSTOFFEN

Gegenstand der vorliegenden Erfindung ist ein Verfahren zur Herstellung von Reaktivfarbstoffen der Formel

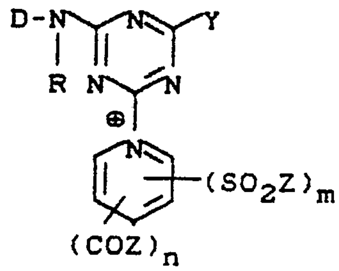

$X^{\ominus}$ (I)

worin
D = Rest eines organischen Chromophors
R = H, $C_1$-$C_4$-Alkyl,
n, m = 0, 1 oder 2 wobei m + n ≦ 2,
Y = nicht fasserreaktiver Substituent
Z = OH, $OR_1$, $NR_2R_3$, OMe wobei
Me = Alkali- oder Erdalkalimetall, insbesondere Li, Na, K,
$X^-$ = Anion einer ein- oder mehrbasigen organischen oder anorganischen Säure,
$R_1$ = gegebenenfalls substituiertes $C_1$-$C_4$-Alkyl
$R_3$, $R_2$ = H, $R_1$,
wobei $R_2$ und $R_3$ zusammen mit dem N-Atom einen heterocyclischen 5- oder 6-Ring bilden können, dadurch gekennzeichnet, daß man einen Farbstoff der Formel

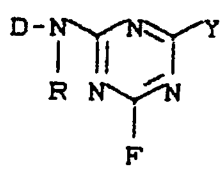

(II)

in Gegenwart säurebindender Mittel mit einer Verbindung der Formel

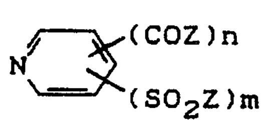

(III)

umsetzt.

Die Umsetzung erfolgt vorzugsweise in wäßrigen oder wäßrig-organischen Medium bei Temperaturen von etwa 40-140° C, vorzugsweise 60-90° C bei pH-Werten von etwa 4-10, vorzugsweise 6-8.

Bevorzugte Verbindungen (III) sind:

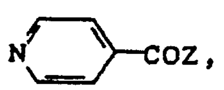
,
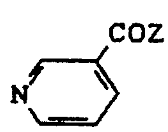
,
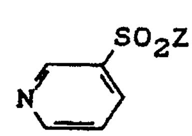

insbesondere die mit Z = OH. Geeignete Anionen $X^{\ominus}$ sind beispielsweise $SO_4^{2-}$, $CO_3^{2-}$, $Cl^{\ominus}$, $Br^{\ominus}$, $F^{\ominus}$, $H_5O_4^{\ominus}$, $HPO_3^{2\ominus}$, $H_2PO_4^{\ominus}$, $HCOO^{\ominus}$, $HBO_3^{2\ominus}$.

Die angegebenen Formeln sind die der freien Säuren. Bei der Herstellung werden im allgemeinen die

Salze erhalten, insbesondere die Alkalisalze wie Natrium-, Kalium- oder Lithiumsalze. Die durch Quaternierung mit Pyridinen entstehende Ladung wird, in Abhängigkeit der Isolierungsbedingungen, durch ein Gegenion $X^{\ominus}$ z.B. Chlorid, Fluorid oder Sulfat ausgeglichen.

Welche Gegenionen im Endprodukt enthalten sind, hängt davon ab, welche Ionen bei vorhergehender Syntheseschritten mit den Reagenzien zugegeben wurden bzw. aus diesen im Verlauf der weiteren Synthese entstanden sind sowie von den Bedingungen bei eventuellen Kristallisationen und Isolierungen. Bei der Druckpermeation können sich die Mengenverhältnisse der einzelnen Ionen nochmals ändern. Außerdem können innere Salze mit Carboxylat- und Sulfonatgruppen gebildet werden.

Die erfindungsgemäßen Farbstoffe eignen sich hervorragend zum Färben und Bedrucken von natürlichen und synthetischen OH- oder amidgruppenhaltigen Materialien, insbesondere solchen aus Cellulose und Polyamiden. Sie sind besonders geeignet zum Färben von Cellulosematerialien in Auszieh- und Klotz-Kaltverweilverfahren, sowie zum Bedrucken von Baumwolle und Zellwolle.

Man erhält bei gutem Aufbauvermogen und hohen Fixierausbeuten Färbungen mit guten Allgemeinechtheiten, insbesondere Naßechtheiten.

Geeignete chromophore Reste D sind insbesondere solche von gegebenenfalls metallhaltigen (Cu, Cr, Co, Ni) Mono-, Dis- oder Trisazofarbstoffen, Anthrachinonfarbstoffen, gegebenenfalls metallhaltigen (Cu, Ni) Phthalocyaninen oder Formazanen, wobei diese Reste vorzugsweise 1-6 Sulfogruppen und/oder Carbonsäuregruppen aufweisen.

Die Alkylreste können gegebenenfalls substituiert sein, beispielsweise durch Halogen, OH, $SO_3H$, $OSO_3H$, $C_1$-$C_4$-Alkoxy, COOH, gegebenenfalls substituiertes Phenyl oder Naphthyl (Halogen, $C_1$-$C_4$-Alkoxy, OH, Acetylamino, Sulfo, Sulfato, Sulfamoyl oder Garbamoyl).

Geeignete Substituenten Y sind insbesondere $-OR_{15}$, $-SR_{15}$ und $-HR_{16}R_{17}$.

$R_{15}$ steht vorzugsweise für gegebenenfalls substituiertes $C_1$-$C_4$-Alkyl oder gegebenenfalls substituiertes Phenyl oder Naphthyl (gegebenenfalls substituiert durch $C_1$-$C_4$-Alkyl, $C_1$-$C_4$-Alkoxy, Halogen, OH, Sulfo, COOH, $SO_2CH_2CH_2OSO_3H$

$R_{16}$ und $R_{17}$ stehen für H, $R_{15}$ oder stehen zusammen mit dem N-Atom für einen Morpholin-, Piperidin- oder Piperazinring.

Bevorzugte Farbstoffe 1 sind solche mit

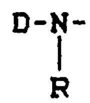

= Rest der Formeln (1)-(32):

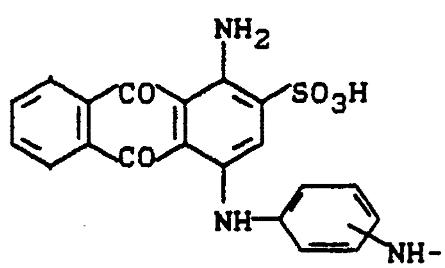

(1)

wobei der Anthrachinonkern durch eine weitere Sulfogruppe, und der Phenylrest durch Alkyl mit 1 bis 4 C-Atomen, Alkoxy mit 1 bis 4 C-Atomen, Halogen, Garboxy oder Sulfo substituiert sein kann, und der Farbstoff vorzugsweise mindestens 2 wasserlöslichmachende Gruppen enthält.

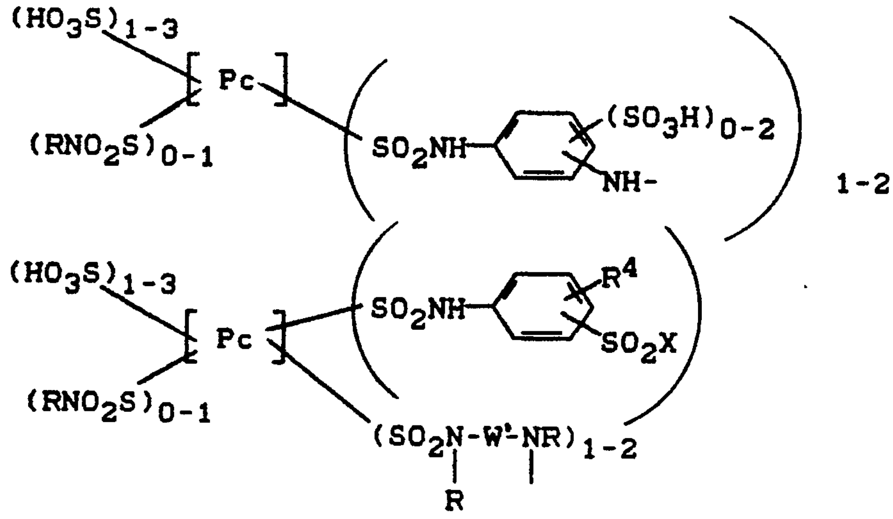

(2)

worin Pc für einen Cu- oder Ni-Phthalocyaninrest steht und die Gesamtzahl der Substituenten am Pc-Gerüst maximal 4 beträgt.

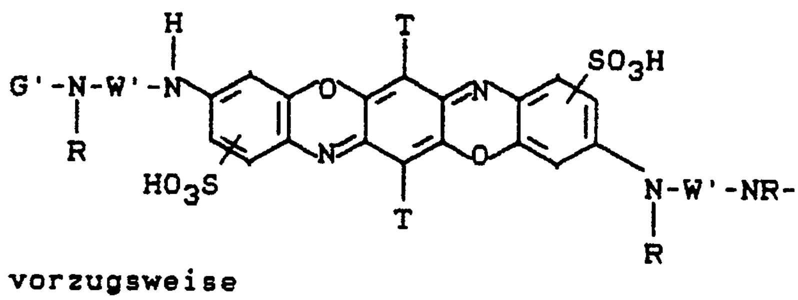

(3)

vorzugsweise

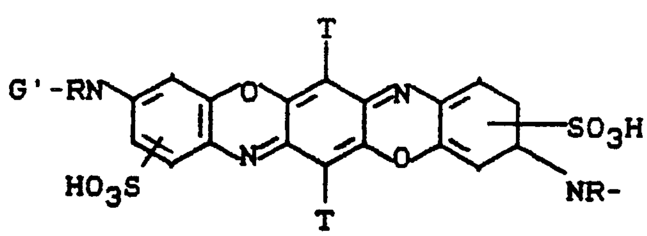

(4)

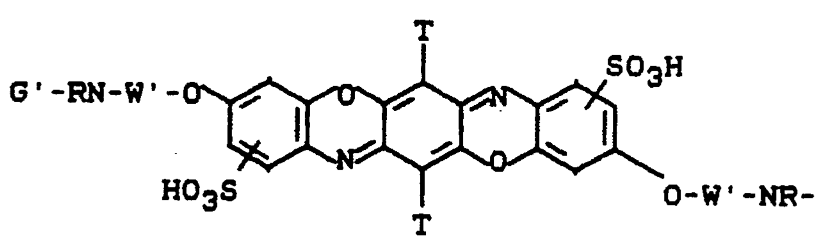

(5)

wobei W′ = aliphatisches oder aromatisches Brückenglied, insbesondere gegebenenfalls substituiertes oder durch Heteroatome oder Heterogruppen unterbrochenes $C_2$-$C_6$-Alkylen oder gegebenenfalls substituiertes Phenylen und

T = Cl, Br, $OCH_3$

G' =

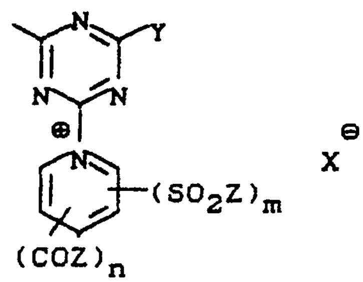

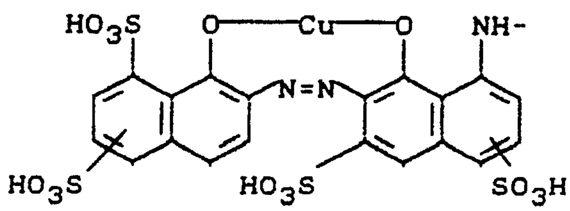

(6)

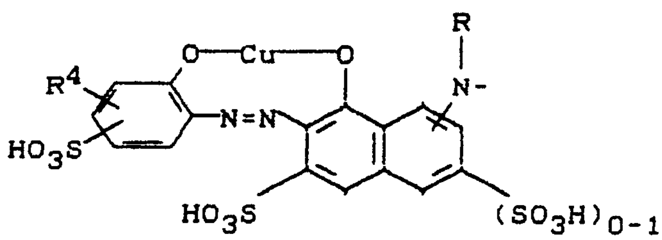

(7)

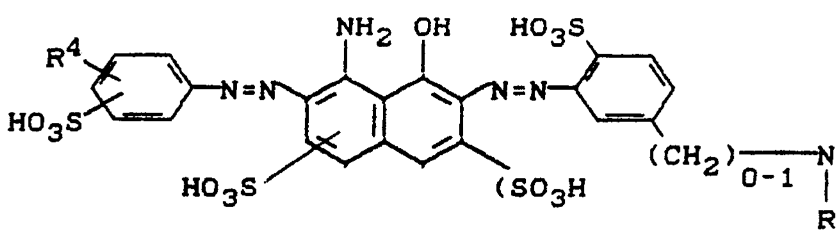

(8)

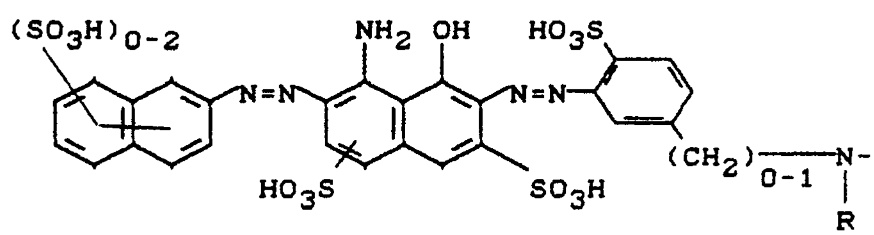

(9)

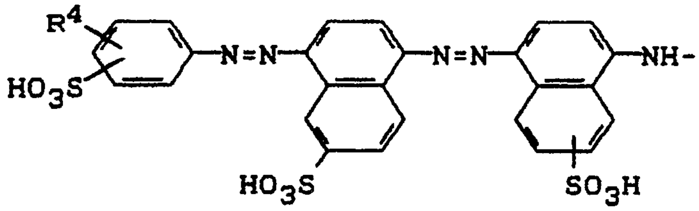

(10)

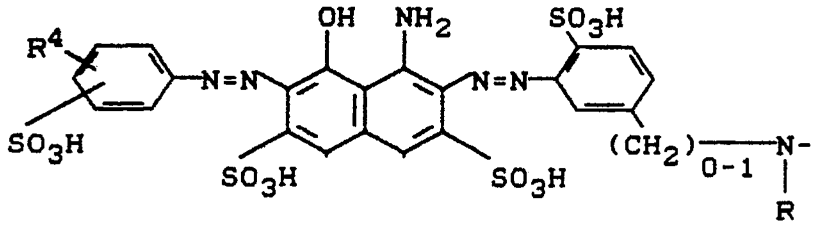

(11)

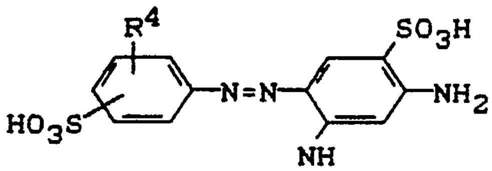

(12)

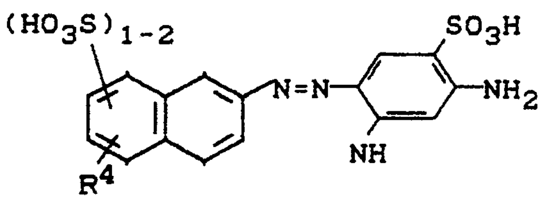

(13)

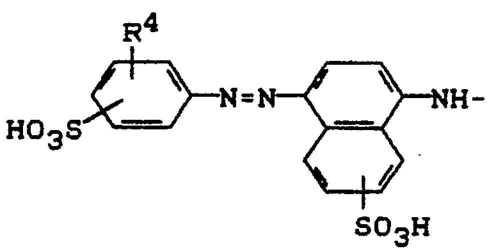

(14)

worin

$R^4$ H, $C_1$-$C_4$-Alkyl, $C_1$-$C_4$-Alkoxy, Cl, Br, COOH, $SO_3H$,

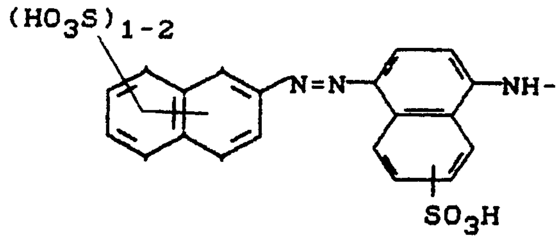

(15)

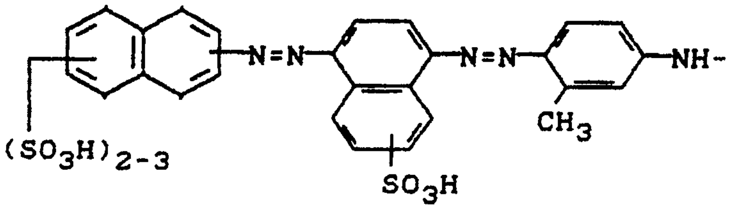

(16)

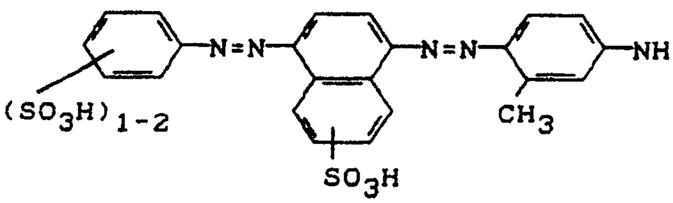

(17)

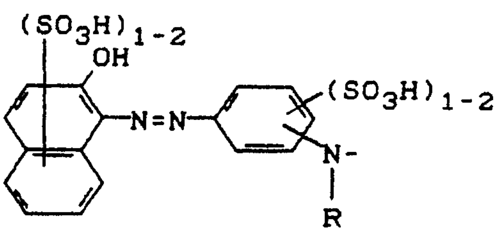

(18)

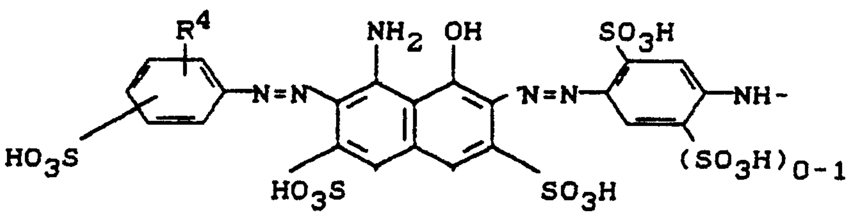

(19)

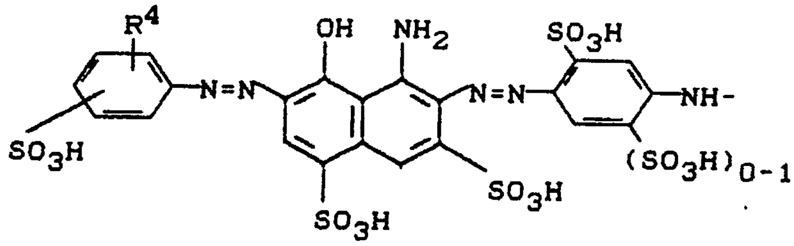

(20)

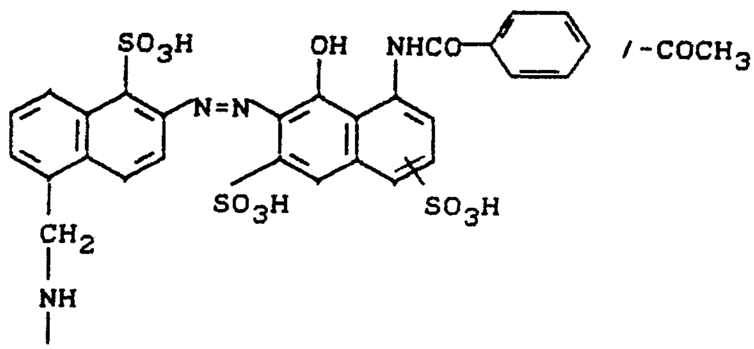

(21)

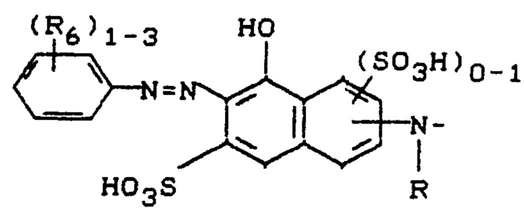

(22)

worin $R_6$ für $C_{1-4}$-Alkyl, $C_{1-4}$-Alkoxy, Halogen, Carboxy und Sulfo steht;

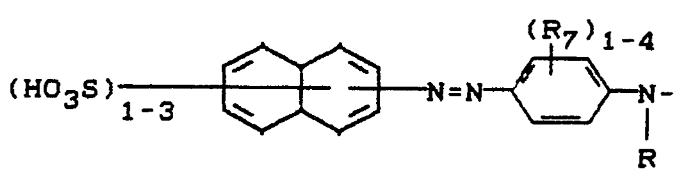

(23)

worin $R_7$ für Wasserstoff, Halogen, Nitro, Cyan, Trifluormethyl, Sulfamoyl, Carbamoyl, $C_{1-4}$-Alkyl, $C_{1-4}$Alkoxy, Amino, Acetylamino, Ureido, Hydroxy, Carboxy, Sulfomethyl und Sulfo unabhängig voneinander, steht;

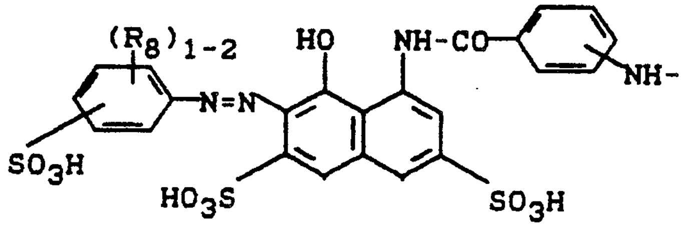

(24)

worin $R_8$ für Wasserstoff, $C_{1-4}$-Alkyl, $C_{1-4}$-Alkoxy, Halogen, Carboxy und Sulfo steht;

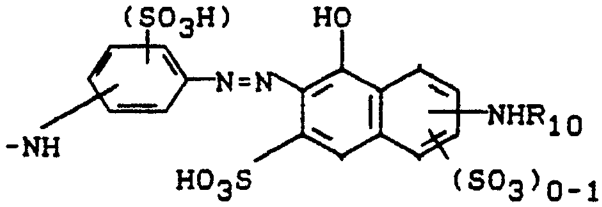

(25)

worin $R_{10}$ Wasserstoff oder $C_{1-4}$-Alkanoyl,

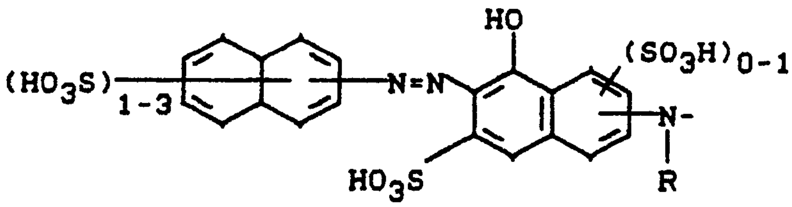

(26)

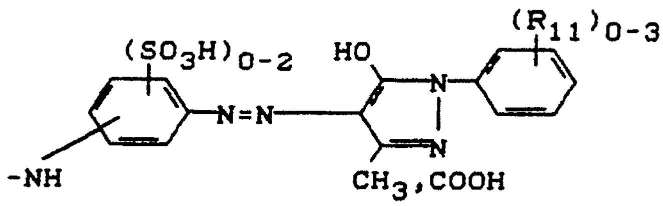

(27)

worin $R_{11}$ für $C_{14}$-Alkyl, $C_{1-4}$-Alkoxy, Halogen, Carboxy und Sulfo steht;

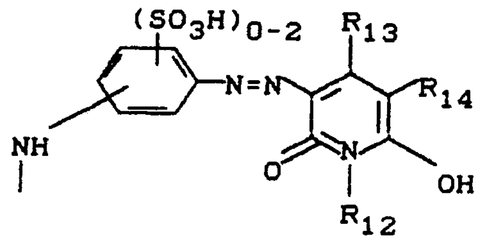

(28)

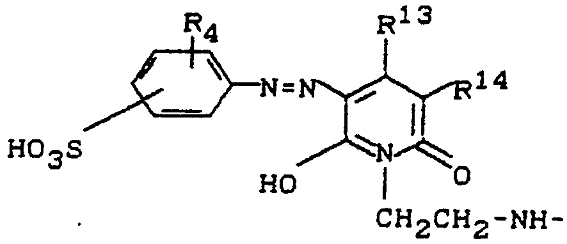

(29)

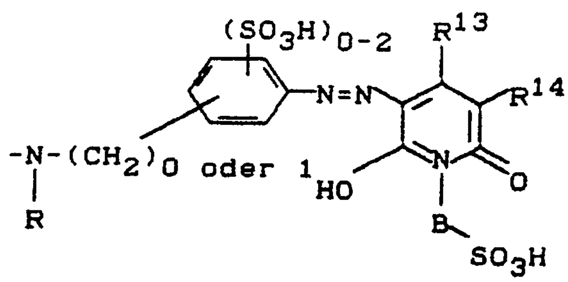

(30)

B = $-(-CH_2-)_{2-3}$, 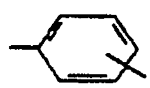

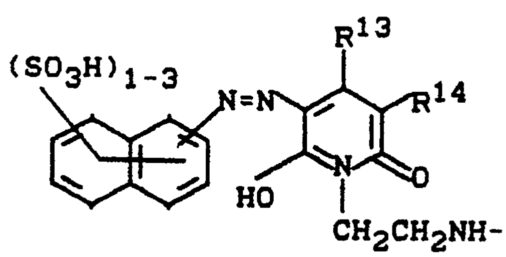

(31)

worin $R_{12}$ und $R_{13}$ unabhängig voneinander:
= H, $C_1$-$C_4$-Alkyl insbesondere $CH_3$ und $CH_2SO_3H$, COOH,
$R^{14}$ = H $SO_3H$, $CH_2SO_3H$, Cl, $C_1$-$C_4$-Alkylsulfonyl Carboamid, insbesondere $CONH_2$ sowie Carbonsäuremono-und -di-$C_1$-$C_4$-alkylamid

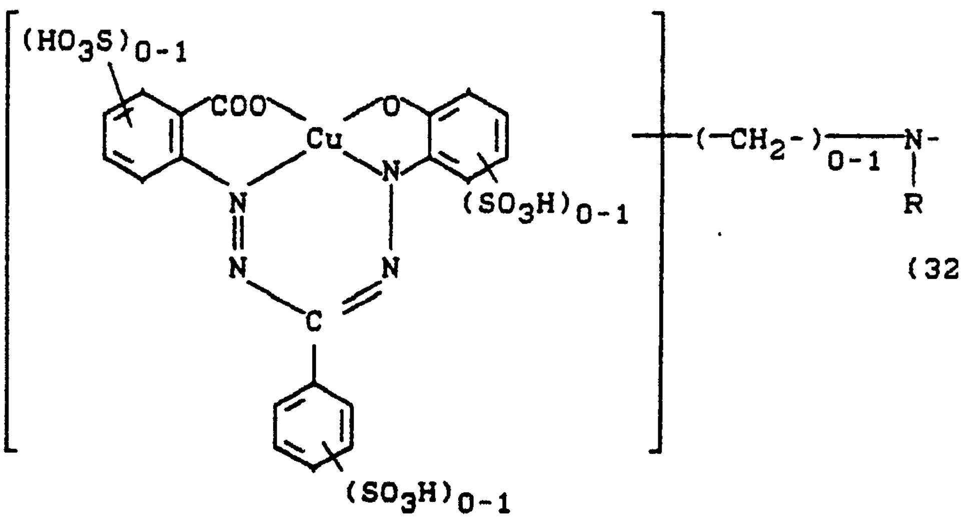

(32)

Bei der Herstellung der Farbstoffe kann man dabei auch so vorgehen, daß man die bei der Synthese der Farbstoffe (II) anfallenden, gegebenenfalls salzhaltigen wäßrigen oder wäßrig-organischen Kupplungs- oder Kondensationslösungen oder -dispersionen direkt mit den Pyridinen (III) umsetzt.

Gegenstand der vorliegenden Erfindung sind auch wäßrige Lösungen von Farbstoffen (1) enthaltend 2-50 Gew.-%, insbesondere 5 bis 30 Gew.-% Farbstoff, 0-1 Gew.-% vorzugsweise 0 bis 0,5 Gew.-% anorganische Neutralsalze, sowie gegebenenfalls 0-40 Gew.-% wassermischbare organische Lösungsmittel sowie gegebenenfalls weitere übliche Hilfsmittel, beispielsweise Puffersubstanzen wobei die Lösungen einen pH-Wert von 4-9, vorzugsweise 6-8 aufweisen, sowie Verfahren zu deren Herstellung.

Geeignete Puffersubstanzen sind beispielsweise Phosphate, Borate und Formiate, beispielsweise $NaH_2PO_4$, $Na_2HPO_4$, $Na_3BO_3$, HCOONa sowie die entsprechenden K- oder Li-Salze

Sie werden in Mengen von etwa 0,5 bis 3 Gew.-%, bezogen auf das Gesamtgewicht der Lösung eingesetzt.

Die Herstellung der Lösungen erfolgt dabei so, daß man zunächst die Farbstoffe (II), gegebenenfalls in Form der bei ihrer Herstellung durch Kupplung oder Kondensationsreaktionen anfallenden wäßrigen Lösungen bzw. Dispersionen in wäßrigen oder wäßrig-organischen Medium mit den Verbindungen (III) umsetzt, die anfallenden Lösungen bzw. Dispersionen durch Druckpermeation aufkonzentriert und dabei den Gehalt an anorganischen Neutralsalzen auf 0-1 Gew.-% erniedrigt und dabei gegebenenfalls vor, während oder nach der Druckpermeation organische wassermischbare Lösungsmittel und/oder weitere übliche Hilfsmittel, beispielsweise Puffersubstanzen zusetzt und einen pH-Wert von 6-8 einstellt.

Geeignete wassermischbare Lösungsmittel sind insbesondere ein- oder mehrwertige Alkohole oder deren Äther, offenkettige oder cyclische Amide, gegebenenfalls substituierte Harnstoffe, offenkettige oder cyclische Sulfone, Dicyandiamid.

Die nach dem erfindungsgemäßen Verfahren hergestellten Lösungen können aber auch gegebenenfalls nach Zusatz von Puffern und geeigneten Stellmitteln durch Sprühtrocknung oder andere Trocknungsverfahren zu festen Formierungen aufgearbeitet werden. Gegebenenfalls können Puffer und Stellmittel auch nach der Trocknung zugesetzt werden.

Beispiel 1

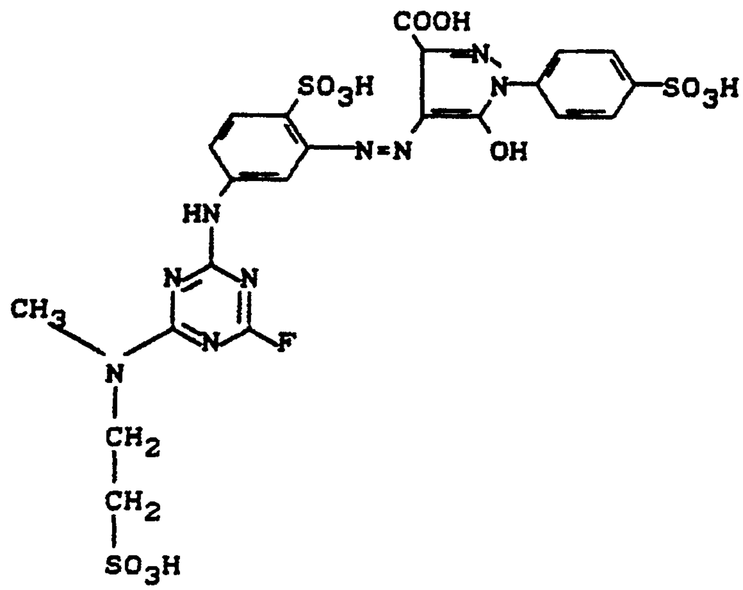

(I)

71,8 g (0,1 Mol) des Monofluortriazinfarbstoffs (I) werden in 250 ml Wasser gerührt.

Mit Sodalösung stellt man einen pH-Wert von 7,5 ein Man gibt 12,9 gNicotinsäure zu und hält mit Natronlauge einen pH-Wert von 7,5. Es wird auf 80-85° C erhitzt Nach Stunden ist die Reaktion beendet. Man erhält 350 ml einer Farbstofflösung. Die Farbstofflösung wird auf einer Durckpermeationsanlage entsalzt und aufkonzentriert. Man verwendet hierzu eine handelsüblich un symmetrische Polymermembran mit einem "Cut-off-hevel" von 1000 und verfährt so, daß 700 g entionisiertes Wasser zugefügt und 870 g salzhaltiges Permeat abgezogen werden Man erhält 180 g einer konzentrierten Farbstofflösung, welche mit 2 g $NaH_2PO_4$, 2 g $Na_2HPO_4$, 6 g ε-Caprolactam und entionisiertem Wasser auf 200 ml eingestellt wird.

Beispiel 2

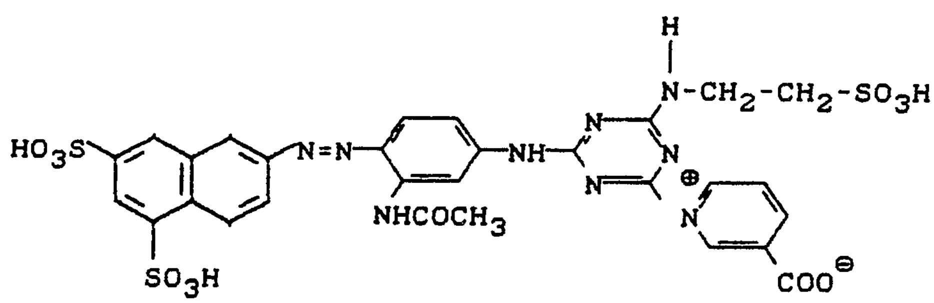

(II)

15g (0,1 Mol) N-(3-Aminophenyl)-acetamid werden in 100 ml Wasser verrührt. Man tropft innerhalb von 15 Minuten 0,1 Mol einer kalten, wäßrigen Diazotierung von 2-Amino-5,7-naphthalindisulfonsäure zu. Durch gleichzeitige Zugabe von Sodalösung hält man einen pHWert von 6. Man rüht 2 h nach und isoliert den Farbstoff durch Zugabe von KCl. Die Paste wird in 300 g Wasser verrührt und mit Lithiumhydroxydlösung neutral gelöst. Bei 0° C tropft man in 20 Minuten 27 g 2,4,6-Trifluor1,3,5-triazin zu Mit $Li_2CO_3$ wird ein pH-Wert von 8,5 gehalten. Nach 30 Minuten gibt man 13,9 g 2-Methylaminoethansulfonsäure zu. Mit $Li_2CO_3$ wird ein pH-Wert von 8,5 gehalten. Nach 30 Minuten gibt man 13,9 g 2- Methylaminaethansulfonsäure zu Mit $Li_2CO_3$ stellt man einen pH-Wert von 7 ein. Man erwärmt auf 20° C. Nach 1 Stunde gibt man 12,9 g Nicotinsäure zu und hält mit Natronlauge einen pH-Wert von 7,5. Man heizt auf 80-85° C auf. Nach 6 Stunden ist die Reaktion beendet. Man erhält 520 ml einer Lösung des Farbstoffs (II).

Diese wird auf einer Druckpermeationsanlage entsalzt und aufkonzentriert. Hierzu wird eine unsymmetrische Polymembran verwendet. Man arbeitet so, daß 1000 ml entionisiertes Wasser zugefügt und 1250 ml salzhaltiges Permeat abgezogen werden. Man erhält 270 ml einer konzentrierten Lösung des obigen

Farbstoffs, welche nach Pufferung mit 2 g $NaH_2PO_4$ und 2 g $Na_2HPO_4$ direkt zum Färben und Drucken verwendet werden kann.

Beispiel 3

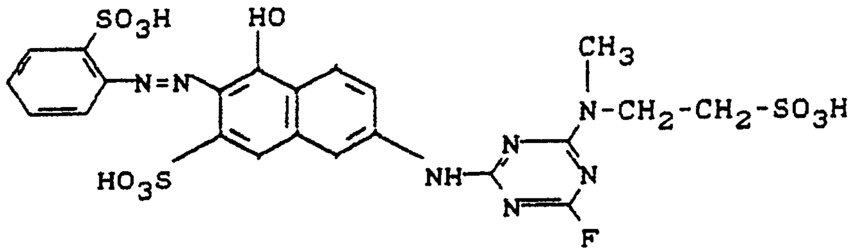

(III)

65,8 g (0,1· Mol) des Monofluortriazinfarbstoffs (III) werden in 200 ml Wasser verrührt Mit Sodalösung stellt man einen pH-Wert von 7,5 ein. Man gibt 12,9 g Nicotinsäure zu und hält mit Natronlauge einen pH-Wert von 7,5. Es wird auf 80-85° C erhitzt. Nach 5 Stunden ist die Reaktion beendet Man erhält 300 ml einer stabilen Farbstofflösung.

Diese wird auf einer handelsüblichen Druckpermeationsanlage mit käuflichen Membranen vom Typ unsymmetrische Polymermembran (Cut-off-hevel ca 1000) entsalzt und aufkonzentriert. Dazu werden 600 ml entionisiertes Wasse hinzugefügt und 750 ml salzhaltiges Permeat abgezogen. Durch Zugabe eines Puffers bestehend aus 3 g $NS_2HPO_4$ und 3 g $NaH_2PO_4$ wird die Lösung gegen Hydrolyse stabilisiert, Man setzt noch 14 g ε-Caprolactam zu und erhält 170 ml einer stabilen Farbstofflösung, die Cellulose und natürliche und synthetische Polyamide in echten Scharlachtönen färbt.

Beispiel 4

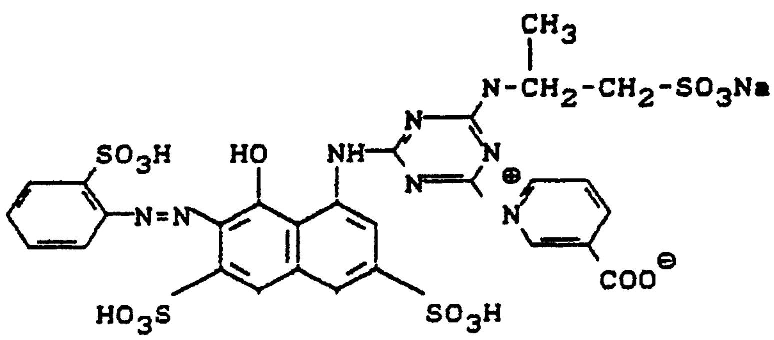

(IV)

34,1 g (0,1 Mol) 1-Amino-8-hydroxy-3,6-naphthalindisulfonsäure werden in 200 ml Wasser verrührt und mit Natronlauge neutral gelöst. Mit 200 g Eis kühlt man auf 0° C ab. Man gibt noch 13,5 g 2,4,6-Trifluor-1,3,5-triazin zu. Durch Zutropfen einer Natriumhydrogencarbonatlösung hält man einen pH-Wert von 4. Man gibt 13,9 g 2Methylaminoethansulfonsäure hinzu. Gleichzeitig hält man durch Zugabe von Sodalösung einen pH-Wert von 7. Man erwärmt auf 10° C und rührt 15 Minuten nach. Es werden 0,1 Mol einer kalten, wäßrigen Diazotierung von 2-Aminobenzolsulfonsäure zugetropft. Mit Sodalösung wird ein pH-Wert von 7-7,5 gehalten. Man rührt 2 Stunden nach und isoliert den Farbstoff durch Zugabe von NaCl. Die Paste wird in 300 ml Wasser verrührt und mit Sodalösung auf pH = 7,5 gestellt. Man gibt 12,9 g Nicotinsäure zu und hält mit Natronlauge einen pH-Wert von 7,5. Es wird auf 80-85° C erhitzt. Nach 6 Stunden ist die Reaktion beendet. Man erhält 450 ml Farbstoff lösung.

Diese Farbstofflösung unterwirft man einer Druckpermeation an einer handelsüblichen unsymmetrischen Membran mit einem "Cut off hevel" von 1000.

Zunächst wird entsalzt indem 900 ml entionisiertes Wasser zugegeben und die gleiche Menge salzhaltiges Permeat ausgeschleust wird. Anschließend wird aufkonzentriert, indem weitere 230 ml salzhaltiges Permeat entfernt werden. Man erhält 220 ml einer konzentrierten Lösung des Farbstoffs mit der Formel IV, der nach Pufferung und Einstellung auf 250 ml zum Färben und Bedrucken verwendet werden kann.

Beispiel 5

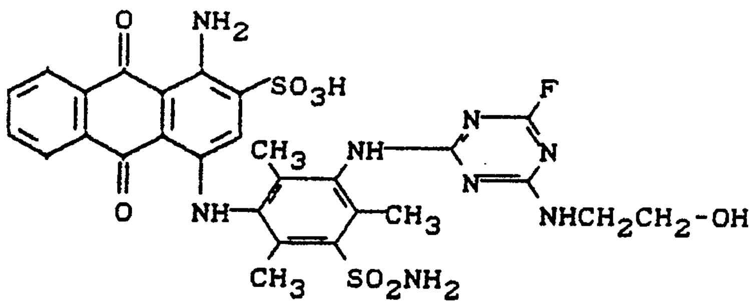

(V)

68,7 g (0,1 Mol) des Monofluortriazinfarbstoffs (V) werden in 300 ml Wasser verrührt und mit Sodalösung aus einen pH-Wert von 7,5 gestellt. Man gibt 12,9 g Pyridincarbonsäure-(4) zu und hält mit Natronlauge einen pHWert von 7,5. Es wird auf 85-90° C erhitzt. Nach 6 Stunden ist die Reaktion beendet Man erhält 400 g einer Farbstofflösung.

Diese Lösung wird auf einer Druckpermeationsanlage entsalzt und aufkonzentriert. Hierzu wird eine handelsübliche unsymmetrische Polymermembran mit einem "Cut-off-level" von 1000 verwendet. Man verfährt so, daß 900 ml entionisiertes Wasser zugefügt und 1100 ml salzhaltiges Permeat abgezogen werden Dies ergibt 200 ml einer hochkonzentrierten blauen Lösung. Diese wird mit 1 g $NaH_2PO_4$ und 1 g ε-Caprolactam und 8 ml Wasser auf 220 ml eingestellt.

Beispiel 6

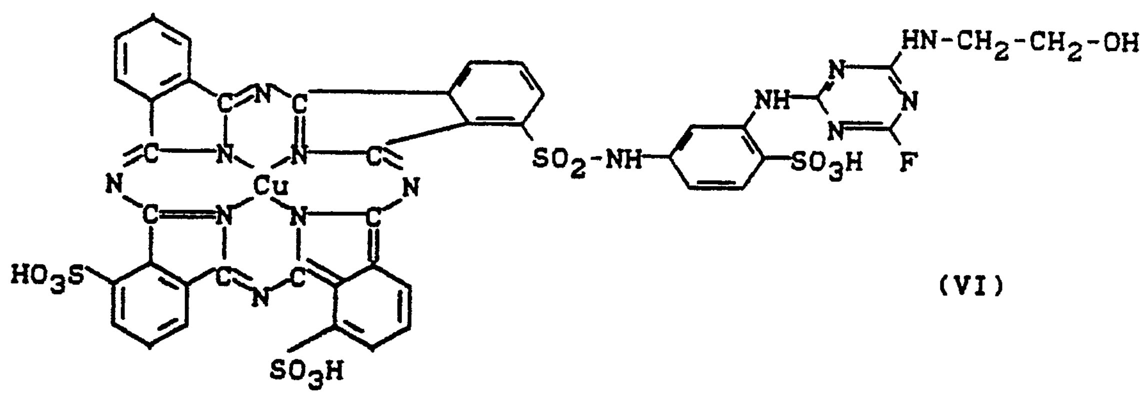

(VI)

122,3 g (0,1 Mol) des Monofluortriazinfarbstoffs (VI) werden in 300 ml Wasser verrührt. Mit Sodalösung stellt man einen pH-Wert von 7,5 ein. Man gibt 12,9 g Pyridincarbonsäure-(4) zu und hält mit Natronlauge einen pH-Wert von 7,5. Es wird auf 85-90 °C aufgeheizt. Nach 6 Stunden ist die Reaktion beendet. Man erhält 450 ml einer Farbstofflösung.

Dies Lösung wird auf einer Druckpermeationsanlage entsalzt und aufkonzentriert. Dazu wird eine asymmetrische Polymermembran mit einer Trenngrenze von 1000 verwendet. Es werden 900 ml entionisierts Wasser zugegeben und 1100 ml salzhaltiges Permeat abgezogen. Man erhält 250 ml einer konzentrierten Farbstofflösung. Man gibt 1 g $NaH_2PO_4$, 1 g $Na_2HPO_4$, 20 ml ε-Caprolactam und 5 ml Butylglykol zu. Anschließend stellt man mit entionisiertem Wasser auf 290 ml. Die erhaltene Lösung färbt textile Substrat aus Baumwolle in echten Tönen.

Beispiel 7

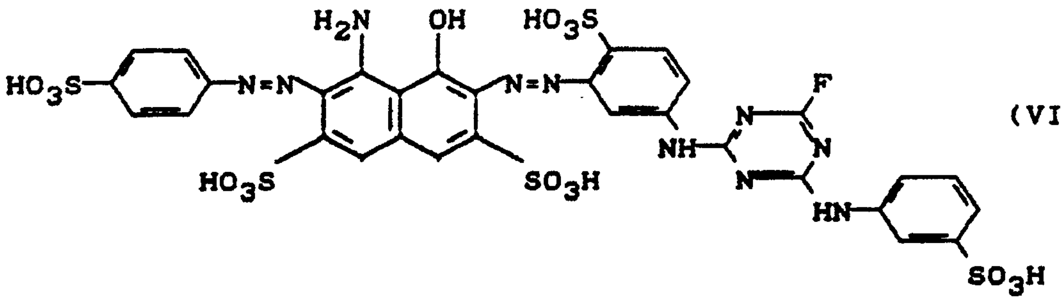

(VI

97,1 g (0,1 Mol) des Monofluortriazinfarbstoffs (VII) werden in 200 ml Wasser verrührt. Mit Sodalösung stellt man einen pH-Wert von 7,5 ein. Man gibt 12,8 g Nicotinsäureamid zu. Nach 6 Stunden 85-90° C ist die Reaktion beendet. Man erhält 330 ml einer Farbstofflösung.

Diese Farbstofflösung wird auf einer Druckpermeationsanlage entsalzt und aufkonzentriert. Man verwendet eine übliche asymmetrische Polymermembran mit einem "Cut off-level" von 1000. Es werden 750 ml entionisiertes Wasser zugefügt und 910 ml salzhaltiges Permat abgezogen. Nach Zugabe von 1 g $NaH_2PO_4$, 1 g $Na_2HPO_4$ und 8 ml entionisiertem Wasser erhält man 170 ml einer stabilen konzentrierten Lösung die textile Substrate aus Baumwolle in chten blauen Tönen färbt.

Beispiel 8

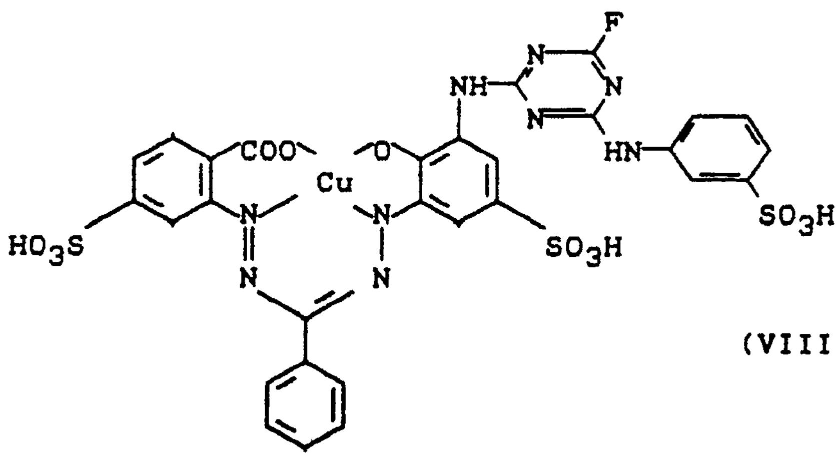

(VIII)

86,4 g (0,1 Mol) des Monofluortriazinfarbstoffs der Formel (VIII) werden in 200 ml Wasser verrührt und mit Sodalösung einen pH-Wert von 7,5 gestellt. Man gibt 12,9 g Nicotinsäure zu und hält mit Natronlauge einen pH-Wert von 7,5. Es wird auf 70-75° C erhitzt. Nach 2 h ist die Reaktion beendet. Man erhält 320 ml einer Farbstofflösung.

Diese wird aufeiner Druckpermeationsanlage entsalzt und aufkonzentriert. Dazu verwendet man eine handelsübliche asymmetrische Membran mit einer Trenngrenze von 1000. Es werden 700 ml entionisiertes Wasser zugefügt und 840 ml salzhaltiges Perment abgezogen. Zu der konzentrierten Farbstofflösung gibt man 1 g $NaH_2PO_4$, 1 g $Na_2HPO_4$, 7 ml ε-Caprolactam und füllt auf 210 ml mit entionisiertem Wasser auf.

**Ansprüche**

1. Verfahren zur Herstellung von Reaktivfarbstoffen dar Formel

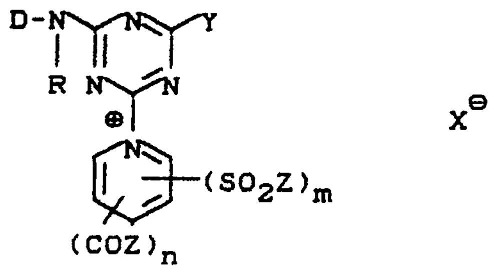

(I)

worin
D = Rest eines organischen Chromophors
R = H, $C_1$-$C_4$-Alkyl,
n, m = 0, 1 oder 2 wobei m + n ≦ 2,
Y = nicht fasserreaktiver Substituent
Z = OH, $OR_1$, $NR_2R_3$, OMe wobei
Me = Alkali- oder Erdalkalimetall, insbesondere Li, Na, K,
$X^-$ = Anion einer ein- oder mehrbasigen organischen oder anorganischen Säure,
$R^1$ = gegebenenfalls substituiertes $C_1$-$C_4$-Alkyl $R_3$, $R_2$ H, $R_1$,
wobei $R_2$ und $R_3$ zusammen mit dem N-Atom einen heterocyclischen 5- oder 6-Ring bilden können, dadurch gekennzeichnet, daß man einen Farbstoff der Formel

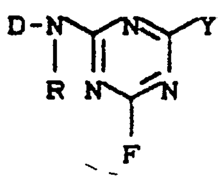

(II)

in Gegenwart säurebindender Mittel mit einer Verbindung der Formel

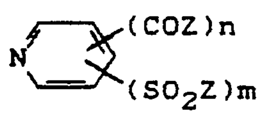

(III)

umsetzt.

2. Verfahren nach Anspruch 1, dadurch geknnzeichnet, daß die Umsetzung in wäßrigem oder wäßrig-organischem Medium bei Temperaturen von etwa 40-140° C, vorzugsweise 60-90° C bei pH-Werten von etwa 4-10, vorzugsweise 6-8 erfolgt.

3. Wäßrige Lösungen von Farbstoffen des Anspruchs 1 enthaltend 2-50 Gew.-%, insbesondere 5 bis 30 Gew.-% Farbstoff, 0-1 Gew.-% vorzugsweise 0 bis 0,5 Gew.-% anorganische Neutralsalze, sowie gegebenenfalls 0-40 Gew.-% wassermischbare organische Lösungsmittel sowie gegebenenfalls weitere übliche Hilfsmittel, beispielsweise Puffersubstanzen wobei die Lösungen einen pH-Wert von 4-9, vorzugsweise 6-8 aufweisen.

4. Verfahren zur Herstellung der Lösungen gemäß Anspruch 3, dadurch gekennzeichnet, daß man Farbstoffe der Formel

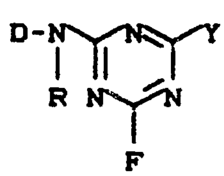

mit den in Anspruch 1 angegebenen Substituentenbedeutungen, gegebenenfalls in Form ihrer bei der Herstellung durch Kupplung oder Kondensation anfallenden wäßrigen Lösungen bzw. Dispersionen in

wäßrigem oder wäßrig-organischem Medium mit Verbindungen der Formel

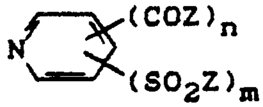

mit den in Anspruch 1 angegebenen substituentenbedeutungen umsetzt und anschließend einer Druckpermeation unterwirft und dabei gegebenenfalls vor, während oder nach der Druckpermeation organische wassermischbare Lösungsmittel und gegebenfalls weitere übliche Hilfsmittel zusetzt.

Europäisches Patentamt

# EUROPÄISCHER RECHERCHENBERICHT

Nummer der Anmeldung

EP 90116819.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| X | DE - A1 - 2 634 308 (IMPERIAL CHEMICAL INDUSTRIES LTD.) * Patentansprüche 1,14; Seite 6, Zeilen 4-24 * -- | 1-4 | C 09 B 62/04 |
| X | PATENT ABSTRACTS OF JAPAN, unexamined applications, C field, Band 10, Nr. 199, 11. Juli 1986 THE PATENT OFFICE JAPANESE GOVERNMENT Seite 32 C 359 * Kokai-Nr. 61-40 367 (NIPPON KAYAKU CO LTD) * ---- | 1,2 | |

| RECHERCHIERTE SACHGEBIETE (Int Cl 5) |
|---|
| C 09 B |

Der vorliegende Recherchenbericht wurde für alle Patentansprüche erstellt.

| Recherchenort | Abschlußdatum der Recherche | Prüfer |
|---|---|---|
| WIEN | 19-12-1990 | HAUSWIRTH |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument